# EUROPEAN PATENT APPLICATION

(11) **EP 4 826 784 A1**
(43) Date of publication of application: **21.10.2026**
(21) Application number: 24904331.6
(22) Date of filing: 16.12.2024
(51) Int. Cl.: H01M 4/36, H01M 4/38, H01M 4/587, H01M 4/62, H01M 10/052, C01B 33/02, H01M 4/02

(54) **ANODE ACTIVE MATERIAL, METHOD FOR MANUFACTURING SAME, AND LITHIUM SECONDARY BATTERY COMPRISING SAME**

(30) Priority: 15.12.2023 KR 20230183922
(71) Applicant: POSCO Holdings Inc., Pohang-si, Gyeongsangbuk-do 37859 (KR); Posco Future M Co., Ltd., Pohang-si, Gyeongsangbuk-do 37918 (KR)
(72) Inventor: KIM, Dae-Hyun, Pohang-si, Gyeongsangbuk-do 37877 (KR); YOU, Seung-Jae, Pohang-si, Gyeongsangbuk-do 37877 (KR); WOO, Jung-Gyu, Pohang-si, Gyeongsangbuk-do 37877 (KR); JO, Hyun-Chul, Pohang-si, Gyeongsangbuk-do 37877 (KR); CHOI, Su-Kang, Pohang-si, Gyeongsangbuk-do 37877 (KR); LEE, Jae-Yoon, Sejong 30003 (KR)
(74) Representative: Pfenning, Meinig & Partner mbB
(86) International application number: PCT/KR2024/020451
(87) International publication number: WO 2025/127766

(57) **Abstract**

The present invention relates to an anode active material, a method for manufacturing same, and a secondary battery including same. The anode active material includes: a silicon-carbon composite including crystalline carbon, silicon-based particles bound to the surface of the crystalline carbon, and amorphous carbon on the surfaces of the crystalline carbon and silicon-based particles; and a carbon coating layer covering the surface of the silicon-carbon composite, wherein the anode active material may include 0.05-0.25 wt% of sulfur based on the total weight thereof.

## Description

### Technical Field

The present disclosure relates to an anode active material, a method for manufacturing the same, and a lithium secondary battery including the same.

### Background Art

As the market for electronic devices such as mobile phones, laptops, and PCs grows, the market for lithium secondary batteries, which are power sources therefor, is also rapidly growing. In addition, as interest in environmental problems increases and demand for eco-friendly vehicles such as electric vehicles increases, lithium secondary batteries capable of meeting various uses are being researched.

Among components constituting the lithium secondary battery, an anode active material plays an important role in storing lithium ions during charging, increasing a charging rate, determining the capacity of the battery, etc. Among such anode active material, a silicon-based active material is attracting attention because electrochemical properties such as capacity and energy output are superior to those of a carbon-based active material.

However, in general, the silicon-based active material has a problem in that lifespan characteristics of a battery are deteriorated due to a large degree of volume expansion and contraction during charge and discharge. In addition, in the silicon-based active material, a phenomenon in which silicon-based particles are broken may occur, or a problem of losing electrical contact may occur due to continuous charge and discharge.

In order to solve such problems, various attempts are continuously being made to nanosize silicon-based particles and to use a silicon-carbon composite, in which nano-sized silicon-based particles and a carbon-based material are composited, as an anode active material.

However, in the conventional silicon-carbon composite, as the number of silicon-based particles having a small crystal grain size increases, a capturing effect by a carbon-based material is reduced and a specific surface area increases, so lifespan characteristics are significantly reduced.

In order to solve the above disadvantage, when the silicon-carbon composite is prepared using amorphous carbon such as pitch, there is still a limitation in that initial charge-discharge efficiency and lifespan characteristics of a battery are reduced due to sulfur derived from the amorphous carbon.

Accordingly, there is a need for research on a silicon-carbon composite that minimizes the amount of sulfur generated from amorphous carbon while having an excellent capturing effect of carbon for silicon.

### Summary of Invention

### Technical Problem

An aspect of the present disclosure is to provide an anode active material capable of improving lifespan characteristics by improving initial efficiency and reducing volume expansion, a method for manufacturing the same, and a lithium secondary battery including the same.

An aspect( 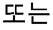 An objective) The object of the present disclosure is not limited to the matters described above. Additional objects of the present disclosure are described throughout the specification, and a person skilled in the art to which the present disclosure pertains will have no difficulty in understanding the additional objects of the present disclosure from the contents described in the specification of the present disclosure.

### Solution to Problem

According to an aspect of the present disclosure, an anode active material includes: a silicon-carbon composite including crystalline carbon, silicon-based particles on a surface of and inside the crystalline carbon, and amorphous carbon on the surfaces of the crystalline carbon and silicon-based particles; and a carbon coating layer covering the surface of the silicon-carbon composite.

The amorphous carbon may be derived from sulfur-containing pitch.

The sulfur-containing pitch may include 20 wt% or more of beta resin based on a total weight thereof.

The sulfur-containing pitch may include one or more selected from the group consisting of coal-based pitch, petroleum-based pitch, natural pitch, and mesophase pitch.

The anode active material may include 10 to 25 wt% of the crystalline carbon based on a total weight thereof.

The crystalline carbon may include one or more selected from the group consisting of artificial graphite, flake graphite, natural graphite, and expanded graphite.

The anode active material may include 20 to 45 wt% of the amorphous carbon based on a total weight thereof.

The anode active material may include less than 3 wt% of the carbon coating layer based on a total weight thereof.

The carbon of the carbon coating layer may be derived from one or more selected from the group consisting of coal-based pitch, petroleum-based pitch, coal tar, polylactic acid (PAA), and polyvinyl alcohol (PVA).

According to another aspect of the present disclosure, a method for manufacturing an anode active material includes: preparing silicon-based particles by grinding a silicon raw material; mixing the silicon-based particles and crystalline carbon; obtaining a first mixture by mixing the mixed silicon-based particles and the crystalline carbon with sulfur-containing pitch; forming a silicon-carbon composite by primary carbonizing the first mixture at 750 to 1100°C; obtaining a second mixture by mixing the silicon-carbon composite and a carbon precursor; and secondary carbonizing the second mixture.

The method may further include, after the obtaining of the first mixture, pressurizing the first mixture to a pressure of less than 1 ton/cm².

The secondary carbonizing may be performed at 700 to 1100°C.

According to still another aspect of the present disclosure, a lithium secondary battery includes: an anode; a cathode; and an electrolyte, in which the anode includes the anode active material described above.

Sulfur may be included in an amount of 0.05 to 0.25 wt% based on a total weight of the anode active material.

### Advantageous Effects of Invention

According to an aspect of the present disclosure, by controlling the sulfur content derived from amorphous carbon, it is possible to improve reversibility and capacity during the charge and discharge process, and improve electrochemical properties such as initial efficiency.

According to another aspect of the present disclosure, it is possible to improve the structural stability of the silicon-carbon composite, and increase lifespan characteristics.

Various and beneficial advantages and effects in the present disclosure are not limited to the above description, and may be more easily understood in the course of describing the specific embodiments in the present disclosure.

### Mode for Invention

Hereinafter, example embodiments of the present disclosure will be described. However, embodiments of the present disclosure may be modified in various different forms, and the terminology used herein is for the purpose of describing the present disclosure and is not intended to limit the present disclosure. In addition, singular forms used herein include the plural forms unless the relevant definition clearly dictates the contrary.

In this specification, the term "including" is used to indicate the inclusion of other components, rather than excluding other components, unless specifically stated otherwise.

Terms including ordinal numbers such as 'first' and 'second' may be used to describe various components. However, these components are not limited by these terms. The terms are used only to distinguish one component from another component. For example, the 'first' component may be named the 'second' component and the 'second' component may also be similarly named the 'first' component, without departing from the scope of the present disclosure. A term 'and/or' includes a combination of a plurality of related items or any one of the plurality of related items.

In addition, unless specifically otherwise specified in the specification of the present disclosure, the unit '%' means wt%.

In addition, in this specification, "Dₙ" refers to a particle size distribution and may represent a particle size at a n% point of a cumulative distribution of the number of particles according to the particle size. For example, D₅₀ is a particle size (average particle size) at a 50% point of the cumulative distribution of the number of particles according to the particle size, D₉₀ is a particle size at a 90% point of the cumulative distribution of the number of particles according to the particle size, and D₁₀ is a particle size at a 10% point of the cumulative distribution of the number of particles according to the particle size. Meanwhile, the particle size distribution may be measured using a laser diffraction method. Specifically, the particle size distribution may be calculated by dispersing powder to be measured in a dispersion medium, introducing the resulting dispersion into a laser diffraction particle size analyzer, and measuring differences in diffraction patterns according to particle size as the particles pass through a laser beam.

Unless defined otherwise, all terms including technical terms and scientific terms used herein have the same meaning as commonly understood by a person of ordinary skill in the art to which the present disclosure belongs. The terms defined in the dictionary are interpreted to have a meaning consistent with the related technical literature and the currently disclosed content.

Hereafter, an anode active material according to an embodiment of the present disclosure will be described. The anode active material according to an embodiment of the present disclosure may include a silicon-carbon composite; and a carbon coating layer disposed on a surface of the silicon-carbon composite.

To increase an energy density of the anode active material, it is advantageous to contain a large amount of silicon. However, as the amount of silicon contained increases, the lifespan characteristics deteriorate due to a change in volume of silicon.

Since the anode active material includes the silicon-carbon composite and a carbon composite covering the surface of the silicon-carbon composite, it may have excellent lifespan characteristics despite having a high energy density.

Specifically, the silicon-carbon composite includes silicon-based particles, crystalline carbon, and amorphous carbon. In the silicon-carbon composite, the silicon-based particles are located inside and on the surface of the crystalline carbon, and at least amorphous carbon may be located on the surface thereof. Specifically, fine silicon-based particles may be embedded or bound to a surface of relatively coarse crystalline carbon, and amorphous carbon may cover the surface thereof. In such a silicon-carbon composite, as silicon-based particles are dispersed along the surface of the crystalline carbon, high electrical conductivity is achieved, and interfacial contact between the crystalline carbon and the silicon-based particles is maximized, and a continuous and uniform electron transport network is formed toward the surface of the crystalline carbon, thereby compensating for the low electrical conductivity of the silicon-based particles. Consequently, the high electrical conductivity may be maintained despite containing a high silicon content. Furthermore, as the amorphous carbon is disposed on the surface of the crystalline carbon and the silicon-based particles, the silicon-carbon composite may maintain structural stability even with volume changes of the silicon-based particles and may have an excellent capacity retention rate despite containing a high silicon content.

The silicon-based particles are materials composed mainly of silicon atoms, and may include, for example, particles made of pure silicon atoms (Si). However, the present disclosure is not limited thereto, and the silicon-based particles may include SiOx (0 < x ≤ 2).

The silicon-based particles may have a crystalline structure, an amorphous structure, or a composite structure in which crystalline and amorphous phases are mixed, and more specifically, the silicon-based particles may have a crystalline structure. Here, the crystalline structure refers to a solid material that forms a regularly arranged lattice or is repeatedly arranged in a space forming nanoparticles, and the crystalline structure may be used as a synonym such as crystal microparticle, crystal grain, crystal particle, etc.

In an embodiment, the silicon-based particles may have a full width at half maximum of the peak corresponding to the (111) plane of the silicon-based particles of 0.45 to 0.65°, more specifically 0.50 to 0.65°, and even more specifically 0.57 to 0.65°. Here, the full width at half maximum of the peak corresponding to the (111) plane of the silicon-based particles may be measured using X-ray diffraction analysis using CuKα rays. For example, the full width at half maximum of the silicon-based particles may be controlled by adjusting the particle size of the silicon-based particles or by changing the process of manufacturing the silicon-based particles. As the full width at half maximum of the silicon-based particles satisfies the above range, the cracking phenomenon of the silicon-based particles may be minimized, and since reversible charging and discharging is possible, electrochemical properties (e.g., lifespan characteristics, etc.) of the anode active material may be improved.

In an embodiment, the silicon-based particles may have a crystal grain size of 10 to 20 nm, 10 to 19 nm, or 10 to 17 nm. Here, the crystal grain size may refer to an average crystal grain size of silicon. The crystallinity of silicon and the crystal grain size of silicon may be confirmed through the X-ray diffraction analysis, and the X-ray diffraction analysis may be performed using an X-ray diffraction (XRD) analysis instrument. The silicon-based particles satisfying the crystal grain size within the above range may possess superior output characteristics and excellent electrochemical performance.

In an embodiment, D₉₀ of the silicon-based particles may be 200 nm or less, 180 nm or less, 160 nm or less, or 150 nm or less, and may be 10 nm or more, without limitation. Specifically, it may be 10 to 200 nm, 30 to 180 nm, or 50 to 150 nm. As the D₉₀ of the silicon-based particles satisfies the above range, the viscosity of the slurry may be maintained at a constant level. Furthermore, as the D₉₀ of the silicon-based particles decreases, the viscosity of the slurry containing the silicon-based particles may increase. The increase in the viscosity of the slurry may mean that the number of nano-sized silicon-based particles within the slurry has increased.

In an embodiment, the silicon-based particles may be greater than 30 wt% and less than or equal to 70 wt%, specifically 35 to 65 wt%, and more specifically 35 to 60 wt%, based on the total weight of the silicon-carbon composite. Within the above range, the crystalline carbon may act as a buffer more stably against the change in volume of the silicon-based particles.

The crystalline carbon may include at least one selected from the group consisting of artificial graphite, flake graphite, natural graphite, expanded graphite, carbon black, fullerene soot, fullerene, carbon nanotubes, and graphene. Specifically, the crystalline carbon may be a carbon body having a graphene layer structure and may be graphite. The graphite may include at least one selected from the group consisting of artificial graphite, flake graphite, natural graphite, and expanded graphite. The crystalline carbon may capture the silicon-based particles in a spaces between the graphene layers and on the surface thereof.

In an embodiment, the crystalline carbon may be graphite, and a ratio (D_{Si}/D_{G}) of an average diameter (D_{G}) of the graphite to an average diameter (D_{Si}) of the silicon-based particles may be 0.001 to 0.07, 0.005 to 0.05, 0.01 to 0.03, or 0.02 to 0.02. Within the above range, silicon-based nanoparticles may be uniformly distributed and disposed in a plane direction of the graphene layer of the graphite.

In an embodiment, the crystalline carbon may be 30 to 60 wt%, specifically 35 to 60 wt%, and more specifically 35 to 55 wt%, based on the total weight of the silicon-carbon composite.

In an embodiment, the crystalline carbon may be included in an amount of 1 to 40 wt%, 10 to 40 wt%, or 10 to 25 wt% based on the total weight of the anode active material. Within the above range, sufficient conductivity of the anode active material is ensured, while excellent structural stability may be achieved.

In an embodiment, the average particle size (D₅₀) of the crystalline carbon may be 15 µm or less, 13 µm or less, 10 µm or less, 8 µm or less, 6 µm or less, or 4 µm or less, and may be 1 µm or more, without limitation. Specifically, the average particle size of the crystalline carbon may be 1 to 15 µm, 1 to 10 µm, 1 to 8 µm, or 1 to 4 µm. As the average particle size (D₅₀) of the crystalline carbon satisfies the above range, the low conductivity characteristics of the silicon-based particles may be compensated, and the conductivity and charge/discharge reversibility may be improved.

In the silicon-carbon composite, the amorphous carbon may improve the capturing effect on the silicon-based particles and further improve the volume expansion of the silicon-carbon composite due to the continuous charge and discharge. Since the amorphous carbon is arranged in a form that surrounds the silicon-based particles and the crystalline carbon, the structural stability of the silicon-carbon composite may be improved.

In an embodiment, the amorphous carbon may be derived from sulfur-containing pitch. The amorphous carbon derived from the sulfur-containing pitch reduces internal pores in the silicon-carbon composite, and the anode active material containing the sulfur-containing pitch may increase the initial efficiency of the battery by reducing side reactions with the electrolyte solution.

Specifically, a carbonization yield of the sulfur-containing pitch may be 50% or more, specifically 50 to 80%, and more specifically 60 to 80%. Here, the carbonization yield refers to a value converted into a percentage by dividing a weight of carbon obtained after heat treatment of the carbon material by the carbon content before heat treatment. The amorphous carbon derived from the sulfur-containing pitch satisfying the above range of carbonization yield is coated more uniformly and densely on the surface of the crystalline carbon and the silicon-based particles to increase the density and conductivity of the silicon-carbon composite, thereby minimizing side reactions with the electrolyte solution and lithium trapping during the charging and discharging.

In an embodiment, the sulfur-containing pitch may contain 20 wt% or more, specifically 20 to 40 wt%, and more specifically 25 to 40 wt% of beta-resin (β-resin) based on the total weight thereof. The beta-resin (β-resin) content is an indicator proportional to cohesiveness and may refer to the content of the remaining portion after extracting toluene-insoluble components and excluding quinoline-insoluble components. The silicon-carbon composite including the amorphous carbon derived from the sulfur-containing pitch in which the beta-resin content satisfies the above range may maintain a more stable structure. Accordingly, when using the anode active material according to an embodiment of the present disclosure, a lithium secondary battery having excellent lifespan characteristics and low expansion characteristics may be realized.

In an embodiment, the sulfur-containing pitch may include one or more selected from the group consisting of coal-based pitch, petroleum-based pitch, natural pitch, and mesophase pitch.

In an embodiment, the amorphous carbon may be derived from a carbon precursor including the sulfur-containing pitch and a carbide of other organic material. For example, the carbide of other organic material may include at least one carbide of organic material selected from the group consisting of sucrose, glucose, galactose, fructose, lactose, mannose, ribose, aldohexose, and kedohexose.

As a non-limiting example, the sulfur-containing pitch may be coal-based pitch. In this case, the coal-based pitch may function as a binder that stably supports the silicon-carbon composite, thereby improving the structural stability of the silicon-carbon composite.

In an embodiment, the amorphous carbon may be 20 to 45 wt%, more specifically 20 to 40 wt%, and even more specifically 25 to 40 wt% based on the total weight of the anode active material. Within the above range, the structural stability of the silicon-carbon composite may be maintained, and the volume expansion due to the continuous charge and discharge may be improved.

The carbon coating layer is disposed to cover the surface of the silicon-carbon composite described above, thereby minimizing the phenomenon where the silicon-based particles are exposed to the surface of the anode active material. Accordingly, the volume expansion phenomenon of the silicon-based particles caused by the continuous charge and discharge may be improved.

The carbon coating layer may be disposed on the surface of the silicon-carbon composite. For example, the carbon coating layer may partially cover the surface of the silicon-carbon composite or cover the entire surface of the silicon-carbon composite.

In an embodiment, the carbon coating layer is an amorphous carbon coating layer, and the carbon of an amorphous carbon coating layer may be derived from one or more selected from the group consisting of coal-based pitch, petroleum-based pitch, coal tar, polylactic acid (PAA), and polyvinyl alcohol (PVA).

In an embodiment, the carbon coating layer may be derived from a carbon precursor having a beta-resin (β-resin) content higher than that of the sulfur-containing pitch. Specifically, the carbon precursor of the carbon coating layer may be coal-based pitch, petroleum-based pitch, or coal tar, and is not particularly limited as long as it has the beta-resin (β-resin) content higher than that of the sulfur-containing pitch. Specifically, based on the beta-resin content of the carbon precursor of the amorphous carbon, the beta-resin content of the carbon precursor of the carbon coating layer may be 1.1 to 3 times, 1.2 to 2.5 times, or 1.3 to 2 times. The carbon precursor containing beta resin within the above range may form the amorphous carbon coating layer that is denser than the amorphous carbon. As a non-limiting example, the carbon precursor of the carbon coating layer may be petroleum-based pitch.

In an embodiment, the carbon coating layer may be less than 3 wt%, more specifically 0.3 wt% or more and less than 3 wt%, and even more specifically 0.5 wt% or more and less than 3 wt%, based on the total weight of the anode active material. The capacity of the anode active material may be maintained within the above range.

In an embodiment, the average thickness of the carbon coating layer may be 10 nm or less, and more specifically 1 to 10 nm. As the average thickness of the carbon coating layer is controlled within the above range, the initial efficiency and capacity of the anode active material may be improved.

Since the amorphous carbon of the silicon-carbon composite is derived from the sulfur-containing pitch, it may contain a large amount of sulfur; however, the anode active material according to an embodiment controls the sulfur content to improve the above problem.

In an embodiment, the anode active material may include 0.05 to 0.25 wt% of sulfur based on the total weight of the anode active material. Specifically, the sulfur content may be controlled by controlling the carbonization temperature when forming the amorphous carbon from the sulfur-containing pitch.

When the sulfur content is controlled to less than 0.05 wt%, it may result in an increase in manufacturing costs considering the limitations of the manufacturing equipment or manufacturing process. In addition, when the sulfur content exceeds 0.25 wt%, it may be difficult to sufficiently secure the above-described effect (i.e., the improvement in electrochemical properties). That is, the sulfur content may be 0.05 to 0.25 wt%, more specifically, the sulfur content may be 0.05 to 0.23 wt%, and even more specifically, the sulfur content may be 0.05 to 0.20 wt%.

Hereafter, a method for manufacturing an anode active material according to an embodiment of the present disclosure will be described. However, this does not mean that the anode active material according to an embodiment of the present disclosure should necessarily be manufactured by the following manufacturing method.

### [Preparation of Silicon-Based Particles]

First, the silicon-based particles may be prepared by grinding silicon raw materials. The description of the silicon-based particles prepared in this step may be applied in the same way as the description of the anode active material described above.

For example, the silicon raw material is a material composed mainly of silicon atoms, and may include, for example, particles made of pure silicon atoms (Si). However, the present disclosure is not limited thereto, and the silicon-based particles may include SiOx (0 < x ≤ 2). In addition, for example, Poly-Si may be used as the silicon raw material.

For example, in the step of preparing the silicon-based particles, the silicon raw material may be nano-ground by mechanical milling using beads. For example, zirconia beads may be used as the beads.

For example, the physical properties (e.g., crystal grain size, full width at half maximum through the X-ray diffraction analysis, etc.) of the silicon-based particles may be controlled by controlling a ball per ratio (BPR) of the silicon raw material and the beads, etc. For example, the BPR of the silicon raw material and the beads may be 4 to 6:1.

For example, the particle size of the beads may be less than twice D₉₉ of the silicon raw material. When the D₉₉ of the silicon raw material is excessively large or the particle size of the beads is excessively small, the nanonization efficiency of the silicon raw material may be significantly reduced. Consequently, the time required to perform the nanonization of the silicon raw material increases, and thus side effects such as oxidation of the silicon-based particles may occur.

For example, the step of preparing the silicon-based particles may be performed at 1500 to 2500 rpm.

For example, the step of preparing the silicon-based particles may be performed by a wet grinding method using an organic solvent. In this case, the oxidation of the silicon-based particles may be prevented. For example, ethanol, isopropyl alcohol, methanol, butanol, or propylene glycol may be used as the organic solvent, and more specifically, ethanol may be used, and even more specifically, ethanol with a purity of 99.9% may be used.

For example, when using a wet grinding method, the solid content may be 8 to 15%. As the solid content is controlled within the above range, the probability of collision between the silicon raw material and the beads may be increased, and thus the nanonization of the silicon raw material may be effectively performed.

### [Step of Mixing Silicon-Based Particles and Crystalline Carbon]

Subsequently, the silicon-based particles and the crystalline carbon may be mixed. Regarding the description of the crystalline carbon in this step, the description in the anode active material described above may be applied in the same way. For example, in this step, the silicon-based particles and the crystalline carbon may be dispersed at high speed to uniformly mix the two raw materials.

For example, the crystalline carbon may include at least one selected from the group consisting of artificial graphite, flake graphite, natural graphite, expanded graphite, carbon black, fullerene soot, fullerene, carbon nanotubes, and graphene. In an embodiment of the present disclosure, the crystalline carbon may include artificial graphite and/or flake graphite. In this case, the conductivity and charge/discharge reversibility of the anode active material may be improved.

As a non-limiting example, the average particle size D₅₀ of the crystalline carbon may be 3 to 10 µm. As the average particle size D₅₀ of the crystalline carbon satisfies the above range, the conductivity characteristics of the silicon-based particles may be compensated, and the conductivity and charge/discharge reversibility may be improved.

As an example, when the wet grinding method is used in the step of preparing the silicon-based particle, the crystalline carbon is added to a dispersion containing the silicon-based particles and the organic solvent, and then the silicon-based particles and the crystalline carbon may be mixed through the high-speed dispersion. In this case, the organic solvent used in the wet grinding may be dried after mixing. For example, a process such as spray drying may be used as a method for drying an organic solvent, and the silicon-carbon precursor may be obtained in which the silicon-based particles and the crystalline carbon condense together and form a physical bond through the spray drying.

### [Step of Obtaining First Mixture]

A first mixture may be obtained by mixing the mixed silicon-based particles and the crystalline carbon with the sulfur-containing pitch. In this step, the description of the sulfur-containing pitch may be applied in the same way as the description of the sulfur-containing pitch of the anode active material described above.

For example, the carbonization yield of the sulfur-containing pitch may be 50% or more, more specifically 50 to 80%, and more specifically 60 to 80%. As the carbonization yield of the sulfur-containing pitch satisfies the above range, the internal pores of the finally manufactured anode active material are reduced, and the side reactions with the electrolyte solution may also be reduced, thereby increasing the initial efficiency of the battery.

For example, based on the total weight of the sulfur-containing pitch, the beta-resin content may be 20 wt% or more, more specifically 20 to 40 wt%, and more specifically 25 to 40 wt%. As the beta-resin content satisfies the above range, the structure of the silicon-carbon composite may be maintained more stably by the amorphous carbon formed in the primary carbonization process described below.

For example, the sulfur-containing pitch may include one or more selected from the group consisting of coal-based pitch, petroleum-based pitch, natural pitch, and mesophase pitch. As a non-limiting example, the amorphous carbon may be derived from the carbon precursor consisting of the sulfur-containing pitch and the carbide of other organic material. For example, the carbide of other organic material may include at least one carbide of organic material selected from the group consisting of sucrose, glucose, galactose, fructose, lactose, mannose, ribose, aldohexose, and kedohexose. In an embodiment of the present disclosure, the sulfur-containing pitch may include coal-based pitch.

For example, the sulfur-containing pitch may be mixed in an amount of 20 to 45 wt% based on the total weight of the finally produced anode active material.

In an embodiment, in the step of obtaining the first mixture, the silicon-based particles, the crystalline carbon, and the sulfur-containing pitch may be uniformly mixed using equipment such as mechanofusion. Accordingly, the independent flow of each raw material may be minimized, and the binding force between the two raw materials may be increased. However, the present disclosure is not limited thereto, and various types of equipment commonly used in the industry for the uniform mixing of raw materials, such as planetary mixers, may be used.

For example, after the step of obtaining the first mixture, a step of pressurizing the first mixture to a pressure of less than 1 ton/cm² may further included. By pressurizing the first mixture, the pores present inside the silicon-carbon composite may be minimized. Specifically, during the carbonization process, a structure is created that facilitates the filling of pores with the sulfur-containing pitch, thereby improving the electrochemical properties of the anode active material. For example, the pressurizing step may be performed by placing the first mixture into the mold and using a press machine.

### [Step of Forming Silicon-Carbon Composite]

The silicon-carbon composite may be formed by primary carbonizing the first mixture. Specifically, when the first mixture is heat-treated, the sulfur-containing pitch may surround the surface of the silicon-carbon composite and be introduced into the interior of the pores formed by the silicon-carbon composite. Accordingly, the capturing effect on the silicon-based particles may be provided, and since the sulfur-containing pitch is arranged in a way that surrounds the silicon-based particles, the amorphous carbon is bound between multiple silicon-based particles, thereby improving the structural stability of the silicon-carbon composite.

By controlling the primary carbonization temperature during the step of forming the silicon-carbon composite, the sulfur content derived from the sulfur-containing pitch may be easily controlled. The temperature of the primary carbonization may be 750 to 1100°C, and more specifically 800 to 1000°C. Within the above range, the excellent electrochemical properties (e.g., initial efficiency, lifespan characteristics, etc.) of the anode active material may be maintained, and the initial efficiency and lifespan characteristics may not deteriorate.

In the step of forming the silicon-carbon composite, the primary carbonization may be performed in an inert atmosphere. For example, the inert atmosphere may be at least one selected from the group consisting of a nitrogen atmosphere, an argon atmosphere, and a helium atmosphere.

As an example, after the step of forming the silicon-carbon composite, a step of grinding the silicon-carbon composite may be further included. In an embodiment of the present disclosure, the grinding of the silicon-carbon composite may be performed using physical impact. For example, the grinding of the silicon-carbon composite may be performed using equipment such as a jet mill or a pin mill. However, the present disclosure is not limited thereto, and various types of equipment commonly used in the industry, such as an air classifier mill, a roller mill, a Raymond mill, a vertical roller mill, a jaw crusher, or a ball mill, may be used.

### [Step of Obtaining Second Mixture]

The silicon-carbon composite and the carbon precursor may be mixed to obtain the second mixture. The carbon precursor may be one or more selected from the group consisting of petroleum-based pitch, coal-based pitch, coal tar, polylactic acid (PAA), and polyvinyl alcohol (PVA), which have a softening point of 250°C or lower.

For example, the carbon precursor may be included in an amount of less than 3 wt% based on the total weight of the finally manufactured anode active material. More specifically, it may be 0.3 wt% or more and less than 3 wt%, and even more specifically, it may be 0.5 wt% or more and less than 3 wt%.

### [Secondary Carbonization Step]

The second mixture may be subjected to secondary carbonization. Specifically, when the second mixture is heat-treated, the carbon precursor is carbonized and liquefied, so the carbon coating layer may be uniformly formed on the surface of the silicon-carbon composite.

For example, the temperature of the secondary carbonization may be 700 to 1100°C. If the temperature of the secondary carbonization exceeds 1100°C, silicon carbide (SiC) compounds are generated, and side reactions may occur during the charge and discharge process due to the SiC compounds, which may degrade initial efficiency and lifespan characteristics. That is, the temperature of the secondary carbonization may be 700 to 1100°C, more specifically 750 to 1000°C, and even more specifically 800 to 1000°C.

For example, the secondary carbonization step may be performed in an inert atmosphere. For example, the inert atmosphere may be at least one selected from the group consisting of a nitrogen atmosphere, an argon atmosphere, and a helium atmosphere.

Hereinafter, a lithium secondary battery according to an embodiment of the present disclosure will be described. The lithium secondary battery according to an embodiment of the present disclosure may include an anode; a cathode; and an electrolyte.

The anode may include the anode active material layer including the above-described anode active material; and a current collector.

The current collector may serve to impart conductivity. The materials that may be used as the current collector are not specifically limited, and materials that possess conductivity without causing chemical changes in the battery may be used. For example, copper, stainless steel, aluminum, nickel, titanium, calcined carbon, or aluminum or stainless steel surface-treated with carbon, nickel, titanium, silver, etc., may be used as the current collector.

The anode active material layer may be disposed on at least one surface of the current collector, and specifically on one or both surfaces. For example, the anode active material may be included in an amount of 80 to 98 wt% based on the total weight of the anode active material layer.

The anode active material layer may further include a binder and/or a conductive material. The binder may serve to bond particles forming the anode active material together and improve the adhesion performance of the anode active material to the current collector. For example, the binder may be included in an amount of 1 to 5 wt% based on the total weight of the anode active material layer.

As an example, the binder may include a non-aqueous binder, an aqueous binder, or a combination thereof. For example, the non-aqueous binder may include one or more selected from the group consisting of ethylene/propylene copolymer, polyacrylonitrile (PAN), polystyrene (PS), polyvinyl chloride (PVC), carboxylated polyvinyl chloride, poly(vinylidene fluoride) (PVDF), polyurethane, polytetrafluoroethylene (PTFE), polyethylene (PE), polypropylene (PP), polyamide-imide (PAI), and polyimide (PI). However, the non-aqueous binder is not limited thereto.

The aqueous binder may include one or more selected from the group consisting of carboxymethylcellulose, styrene butadiene rubber (SBR), acrylated styrene butadiene rubber, nitrile butadiene rubber (NBR), acrylic rubber, butyl rubber, fluororubber, a polymer including ethylene oxide, polyvinylpyrrolidone (PVP), polyepichlorohydrin, polyphosphazenes, ethylene-propylene-diene copolymer (EPDM), poly(vinyl pyridine), chlorosulfonated polyethylene (CSM), latex, polyester resin, acrylic resin, phenol resin, epoxy resin, and polyvinyl alcohol (PVA). However, the non-aqueous binder is not limited thereto.

For example, when the aqueous binder is used as the binder, the anode active material layer may further include a thickening agent capable of imparting viscosity. The thickening agent may include a cellulose-based compound. For example, the cellulose-based compound may include one or more selected from the group consisting of carboxymethylcellulose, hydroxypropylmethylcellulose, methylcellulose, and alkali metal salts in which the hydrogens thereof are substituted with Na, K, or Li. For example, the thickener may be included in an amount of 0.1 to 3 weight percent based on the total weight of the anode active material layer.

The conductive material may be used to impart conductivity to the electrode. The materials that may be used as the conductive material are not specifically limited, and materials that possess conductivity without causing chemical changes in the battery may be used. Examples of the conductive material may include carbon-based materials such as natural graphite, artificial graphite, carbon black, carbon nanotube, graphene, acetylene black, ketjen black, and carbon fiber; metal-based substances such as metal powders such as copper, nickel, aluminum, and silver, or metal fibers, conductive polymers such as polyphenylene derivatives, a conductive material containing a mixture thereof.

The anode may be obtained by preparing an active material composition by mixing a binder and/or a conductive material together with the anode active material in a solvent, and applying the active material composition to the current collector. For example, the solvent may include water. Since methods commonly used in the industry may be applied for the method for manufacturing an anode, a detailed description thereof is omitted in this specification.

The cathode includes a current collector; and a cathode active material layer formed on at least one surface of the current collector and including a cathode active material. For example, the cathode active material may be included in an amount of 80 to 98 wt% based on the total weight of the cathode active material layer.

The current collector may serve to impart conductivity. The materials that may be used as the current collector are not specifically limited, and materials that possess conductivity without causing chemical changes in the battery may be used. For example, stainless steel, aluminum, nickel, titanium, calcined carbon, or aluminum or stainless steel surface-treated with carbon, nickel, titanium, silver, etc., may be used as the current collector.

The cathode active material may include a compound capable of reversible intercalation and deintercalation of lithium (a lithiated intercalation compound). The cathode active material may be a commonly used cathode active material and may include, for example, one or more composite oxides of lithium and a metal selected from cobalt, manganese, nickel, and combinations thereof. Specifically, examples of the cathode active material may include layered compounds such as lithium cobalt oxide (LiCoO₂) and lithium nickel oxide (LiNiO₂), or compounds substituted with one or more transition metals; lithium iron oxides such as LiFe₃O₄; lithium manganese oxides such as Li_{1+c1}Mn_{2-c1}O₄ (0 ≤ c1 ≤ 0.33), LiMnO₃, LiMn₂O₃, LiMnO₂; lithium copper oxide (Li₂CuO₂); vanadium oxides such as LiV₃O₈, V₂O₅, Cu₂V₂O₇; Ni-site substituted lithium nickel oxides represented by the chemical formula LiNi_{1-c2}M_{c2}O₂ (wherein M is one or more selected from the group consisting of Co, Mn, Al, Cu, Fe, Mg, B, and Ga, and 0.01 ≤ c2 ≤ 0.3); lithium manganese composite oxides represented by the chemical formula Li₂Mn₃MO₈ (wherein M is one or more selected from the group consisting of Co, Ni, Fe, Cr, Zn, and Ta, and 0.01 ≤ c3 ≤ 0.1) or Li₂Mn₃MO (wherein M is one or more selected from the group consisting of Fe, Co, Ni, Cu, and Zn); and LiMn₂O₄ in which part of Li is substituted with alkaline earth metal ions, but are not limited thereto. The cathode may also be Li-metal.

For example, the above compound may be used having a coating layer on its surface, or a mixture of the above compound and the compound having a coating layer may be used. The coating layer may include one or more coating element compounds selected from the group consisting of oxides of coating elements, hydroxides of coating elements, oxyhydroxides of coating elements, oxycarbonates of coating elements, and hydroxycarbonates of coating elements. The compound forming the coating layer may be amorphous or crystalline. As for the coating elements included in the coating layer, one or more selected from the group consisting of Mg, Al, Co, K, Na, Ca, Si, Ti, V, Sn, Ge, Ga, B, As, and Zr may be used. For the coating layer formation process, any coating method may be used as long as the compound may be coated using these elements in a method (e.g., spray coating, immersion method, etc.) that does not adversely affect the physical properties of the cathode active material. Since methods commonly used in the industry may be applied, a detailed description thereof is omitted in this specification.The cathode active material layer may further include a binder and/or a conductive material. The binder may serve to bond the particles comprising the cathode active material to each other and improve the adhesion performance of the cathode active material to the current collector. For example, the binder may be included in an amount of 1 to 5 wt% based on the total weight of the cathode active material layer.

The binder may include one or more selected from the group consisting of poly(vinylidene fluoride) (PVDF), poly(vinylidene fluoride-co-hexafluoropropylene) copolymer (PVDF-co-HFP), polyvinyl alcohol (PVA), polyacrylonitrile (PAN), carboxymethyl cellulose, starch, hydroxypropyl methylcellulose, regenerated cellulose, polyvinyl chloride (PVC), carboxylated polyvinyl chloride, polyvinyl pyrrolidone (PVP), polytetrafluoroethylene (PTFE), polyethylene (PE), polypropylene (PP), ethylene-propylene-diene copolymer (EPDM), sulfonated EPDM, styrene butadiene rubber (SBR), fluororubber, and copolymers thereof.

The conductive material may be used to impart conductivity to the electrode. The materials that may be used as the conductive material are not specifically limited, and materials that possess conductivity without causing chemical changes in the battery may be used. Examples of the conductive material may include graphite such as natural graphite or artificial graphite; carbon-based materials such as carbon black, acetylene black, Ketjen black, channel black, furnace black, lamp black, summer black, and carbon fiber; metal powders or metal fibers such as copper, nickel, aluminum, and silver; conductive whiskers such as zinc oxide and potassium titanate; conductive metal oxides such as titanium oxide; conductive polymers such as polyphenylene derivatives, and the like, and one kind thereof alone or a mixture of two or more kinds thereof may be used.

The cathode may be obtained by preparing an active material composition by mixing a binder and/or a conductive material together with the cathode active material in a solvent, and applying the active material composition to the current collector. For example, the solvent may include water. Since methods commonly used in the industry may be applied for the method for manufacturing a cathode, a detailed description thereof is omitted in this specification.

The electrolyte may include, but is not limited to, organic liquid electrolytes, inorganic liquid electrolytes, solid polymer electrolytes, gel-type polymer electrolytes, solid inorganic electrolytes, or molten inorganic electrolytes that are commonly used in the relevant art for manufacturing lithium secondary batteries. Specifically, the electrolyte may include a non-aqueous organic solvent and/or a lithium salt.

The non-aqueous organic solvent may serve as a medium through which ions involved in the electrochemical reaction of the battery may move. For example, the non-aqueous organic solvent may include one or more selected from the group consisting of carbonate-based, ester-based, ether-based, ketone-based, alcohol-based, and aprotic solvents.

The carbonate-based solvents may include dimethyl carbonate, diethyl carbonate, dicaprylyl carbonate, methylpropyl carbonate, ethylpropyl carbonate, methyl ethyl carbonate, ethylene carbonate, propylene carbonate, butylene carbonate, etc. The ester-based solvents may include methyl acetate, ethyl acetate, n-propyl acetate, dimethyl acetate, methyl propionate, ethyl propionate, propyl propionate, decanolide, mevalonolactone, caprolactone, etc. The ether-based solvents may include dibutyl ether, tetraglyme, diglyme, dimethoxyethane, 2-methyltetrahydrofuran, tetrahydrofuran, etc. cyclohexanone, etc., may be used as the above ketone-based solvent. Ethanol, isopropyl alcohol, etc., may be used as the alcohol-based solvent. As the aprotic solvent, nitriles such as R-CN (where R is a hydrocarbon group with a straight, branched, or ring structure having 2 to 20 carbon atoms and may include a double bond, a directional ring, or an ether bond), amides such as dimethylformamide, dioxolanes such as 1,3-dioxolane, sulfolanes, etc., may be used.

The lithium salt is dissolved in an organic solvent and acts as a source of lithium ions within the battery to enable the operation of the basic lithium secondary battery, and may play a role in promoting the movement of lithium ions between the cathode and the anode. As the anion of the lithium salt, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used.

For example, the concentration of the lithium salt may be 0.1 to 2.0 M. When the concentration of the lithium salt is within the above range, the electrolyte possesses appropriate conductivity and viscosity, thereby exhibiting excellent electrolyte performance, which allows lithium ions to move more effectively.

For example, depending on the type of lithium secondary battery, the lithium secondary battery may further include a separator formed between the cathode and the anode. The separator separates the anode and the cathode and provides a pathway for the movement of lithium ions; any separator used in the industry for secondary batteries may be used without special restrictions. For example, polyethylene, polypropylene, polyvinylidene fluoride, or a multilayer film of two or more of these may be used as the separator. However, the present disclosure is not limited thereto, and a mixed multilayer film such as a polyethylene/polypropylene two-layer separator, a polyethylene/polypropylene/polyethylene three-layer separator, or a polypropylene/polyethylene/polypropylene three-layer separator may also be used.

The lithium secondary battery may be disposed in a battery case. The shape of the battery case may be one or more selected from the group consisting of a cylindrical shape using a can, a prismatic shape, a pouch shape, and a coin shape. However, the shape of the battery case is not limited thereto, and the battery case may have various shapes commonly used in the relevant art.

Hereinafter, the present disclosure will be described in more detail with reference to Examples. However, it should be noted that the following Examples are only for illustrating the present disclosure in more detail and are not intended to limit the scope of the present disclosure. This is because the scope of the present disclosure is determined by the matters described in the claims and the matters reasonably inferred therefrom.

### (Example 1)

Poly-Si was mixed with 99.9% pure anhydrous ethanol, and then milled at 2500 rpm using zirconia beads (BPR of Poly-Si to zirconia beads = 5:1) to prepare a dispersion containing silicon-based particles (D₉₀ of 150 nm). After adding graphite to the dispersion, silicon-based particles and graphite (D50 of 3 µm) were mixed using a high-speed disperser, followed by spray drying to form a silicon-carbon precursor.

A first mixture was obtained by mixing the silicon-carbon precursor with pitch (sulfur: 7,500 ppm, β-resin: 22 wt%), and then the first mixture was placed in a mold and pressed. The pressed first mixture was primarily carbonized at 800°C in an inert atmosphere to form a silicon-carbon composite.

After grinding the silicon-carbon composite, a second mixture was obtained by mixing the silicon-carbon composite with a petroleum-based pitch (sulfur: 6,800 ppm, β-resin: 35 wt%) having a softening point of less than 250°C. Thereafter, the second mixture was secondarily carbonized at 1,000°C in an inert atmosphere, and then classified through sieving to manufacture the anode active material of Example 1.

### (Example 2)

An anode active material of Example 2 was manufactured in the same manner as in the manufacturing method of Example 1, except that the primary carbonization temperature was changed to 900°C.

### (Example 3)

An anode active material of Example 3 was manufactured in the same manner as in the manufacturing method of Example 1, except that the primary carbonization temperature was changed to 1000°C.

### (Example 4)

An anode active material of Example 4 was manufactured in the same manner as in the manufacturing method of Example 2, except that the secondary carbonization temperature was changed to 700°C.

### (Example 5)

An anode active material of Example 5 was manufactured in the same manner as in the manufacturing method of Example 2, except that the secondary carbonization temperature was changed to 800°C.

### (Example 6)

An anode active material of Example 6 was manufactured in the same manner as in the manufacturing method of Example 2, except that the secondary carbonization temperature was changed to 900°C.

### (Comparative Example 1)

An anode active material of Comparative Example 1 was manufactured in the same manner as in the manufacturing method of Example 1, except that the primary carbonization temperature was changed to 700°C.

### (Experimental Example 1: Measurement of Physical Properties of Anode Active Material)

For the above Examples and Comparative Example, the sulfur content and the crystal grain size of the silicon-based particles were measured, and the results are shown in Table 1.

The sulfur content was measured using a sulfur determinator. Specifically, the sample was combusted by a high-frequency induction method to generate sulfur dioxide, and the sulfur content was determined by analyzing the intensity of infrared absorption of the sulfur dioxide.

For the crystal grain size, X-ray diffraction analysis was performed on the silicon-based particles using CuKα radiation with respect to the (111) plane, and the full width at half maximum of the peak was measured. Thereafter, the crystal grain size of the silicon-based particles was calculated using the Scherrer equation.

**[Table 1]**

| Divison | Sulfur content (ppm) | Crystal grain size (nm) of silicon-based particle |
|---|---|---|
| Example 1 | 2000 | 15.9 |
| Example 2 | 1700 | 16.2 |
| Example 3 | 1500 | 16.6 |
| Example 4 | 1800 | 16.1 |
| Example 5 | 1700 | 16.1 |
| Example 6 | 1700 | 16.2 |
| Comparative Example 1 | 2700 | 15.8 |

Referring to Table 1, it could be seen that, in Examples 1 to 6 satisfying the preparation conditions proposed in the present disclosure, the sulfur content and the crystal grain size of the silicon-based particles were controlled to desired levels.

Meanwhile, it was confirmed that, in Comparative Example 1 in which the primary carbonization temperature was set to be low, the sulfur content was as high as 2,700 ppm.

### (Experimental Example 2: Measurement of Electrochemical Properties of Anode Active Material)

In order to evaluate the electrochemical properties of the above Examples and Comparative Example, lithium half-cells were manufactured using each anode active material.
(1) Manufacturing of lithium half-cell for evaluating characteristics of electrode manufactured solely with the anode active material of the Examples

Specifically, the anode active material was coated onto a Cu current collector so as to have a loading amount of 5 mg/cm² and an electrode density of 1.2 to 1.3 g/cc, followed by rolling, thereby manufacturing an anode. In this case, a polyacrylic acid (PAA) system was used as a binder for electrode manufacturing.

Lithium metal (Li-metal) was used as a counter electrode, and as an electrolyte solution, a solution obtained by dissolving 1.0 M LiPF₆ in a mixed solvent of EC:EMC = 3:7 without additives and then adding 1.5 wt% of VC was used. Using each component described above, a 2032 coin cell-type half-cell was manufactured according to a conventional method.

(2) Manufacturing of lithium half-cell for evaluating characteristics of electrodes manufactured with anode active material mixed with graphite
A coin cell-type half-cell was manufactured by mixing the anode active material with natural graphite while maintaining a negative electrode capacity of 600 mAh/g. Specifically, during the manufacturing of the negative electrode, the negative electrode slurry was composed of anode active material + natural graphite : conductive material : CMC : SBR = 95.8 : 1 : 1.7 : 1.5, and the rolling density was maintained at 1.4 g/cc.

Lithium metal (Li-metal) was used as a counter electrode, and as an electrolyte solution, a solution obtained by dissolving 1.0 M LiPF₆ in a mixed solvent of EC:EMC = 3:7 without additives and then adding 1.5 wt% of VC was used. Using each component described above, a 2032 coin cell-type half-cell was manufactured according to a conventional method.

(3) Method for Evaluating Electrochemical Characteristics
For the half-cells manufactured using the Examples and Comparative Example alone, the initial capacity was measured. In addition, for the half-cells manufactured by mixing the natural graphite using the Examples and Comparative Example, the initial capacity, the initial efficiency, and the capacity retention rate at 50 cycles were measured, and the results are shown in Table 2.

Specifically, a current of 0.1C was applied during charging and discharging in the initial cycle. In this case, the initial discharge capacity was measured, and the initial efficiency was measured as a percentage of the initial discharge capacity relative to the initial charge capacity.

Thereafter, based on 1st 1C capacity, a current of 0.5C was applied during the charging and discharging, and the charge and discharge cycle was repeated 50 times. At this time, the charge cut-off current was set to 0.005C. After repeating the cycle 50 times, the capacity retention rate at 50 cycles was calculated according to the following Equation: 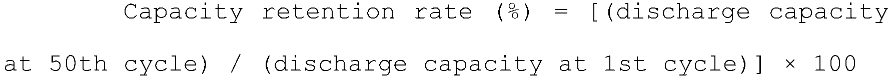 Capacity retention rate (%) = [(discharge capacity at 50th cycle) / (discharge capacity at 1st cycle)] × 100

**[Table 2]**

| Division | Single electrode characteris tics | Characteristics of electrode mixed with graphite | | |
|---|---|---|---|---|
| | Initial capacity (mAh/g) | Initial capacity (mAh/g) | Initial efficiency (%) | Capacity retention rate (%) |
| Example 1 | 1598.7 | 613.6 | 89.15 | 57.5 |
| Example 2 | 1608.1 | 614.8 | 89.28 | 63.2 |
| Example 3 | 1609.4 | 615.8 | 89.29 | 61.2 |
| Example 4 | 1605.7 | 613.8 | 89.21 | 62.7 |
| Example 5 | 1607.7 | 614.7 | 89.26 | 63.6 |
| Example 6 | 1608.0 | 614.6 | 89.28 | 63.1 |
| Comparative Example 1 | 1591.8 | 611.4 | 88.72 | 51.5 |

Referring to Table 2, it could be seen that, in Examples 1 to 6 satisfying the manufacturing conditions proposed in the present disclosure, both the single electrode characteristics and the electrode characteristics when mixed with graphite were controlled to the desired level.

On the other hand, in Comparative Example 1, in which the primary carbonization temperature was controlled to be low, the initial capacity was measured to be low when the electrode was manufactured using the anode active material alone. Furthermore, even when the electrode was manufactured using the anode active material mixed with graphite as in Comparative Example 1, the initial capacity, the initial efficiency, and the capacity retention rate were all measured to be low. That is, in Comparative Example 1, since the sulfur content was not controlled to an appropriate level, it could be seen that the electrochemical properties were deteriorated.

While example embodiments have been shown and described above, it will be apparent to those skilled in the art that modifications and variations could be made without departing from the scope of the present disclosure as defined by the appended claims.

## Claims

1. An anode active material, comprising:
a silicon-carbon composite including crystalline carbon, silicon-based particles on a surface of and inside the crystalline carbon, and amorphous carbon on the surfaces of the crystalline carbon and silicon-based particles; and
a carbon coating layer covering the surface of the silicon-carbon composite.

2. The anode active material of claim 1, wherein the amorphous carbon is derived from sulfur-containing pitch.

3. The anode active material of claim 2, wherein the sulfur-containing pitch includes 20 wt% or more of beta resin based on a total weight thereof.

4. The anode active material of claim 2, wherein the sulfur-containing pitch includes one or more selected from the group consisting of coal-based pitch, petroleum-based pitch, natural pitch, and mesophase pitch.

5. The anode active material of claim 1, wherein the anode active material includes 10 to 25 wt% of the crystalline carbon based on a total weight thereof.

6. The anode active material of claim 1, wherein the crystalline carbon includes one or more selected from the group consisting of artificial graphite, flake graphite, natural graphite, and expanded graphite.

7. The anode active material of claim 1, wherein the anode active material includes 20 to 45 wt% of the amorphous carbon based on a total weight thereof.

8. The anode active material of claim 1, wherein the anode active material includes less than 3 wt% of the carbon coating layer based on a total weight thereof.

9. The anode active material of claim 1, wherein the carbon of the carbon coating layer is derived from one or more selected from the group consisting of coal-based pitch, petroleum-based pitch, coal tar, polylactic acid (PAA), and polyvinyl alcohol (PVA).

10. A method for manufacturing an anode active material, comprising:
preparing silicon-based particles by grinding a silicon raw material;
mixing the silicon-based particles and crystalline carbon;
obtaining a first mixture by mixing the mixed silicon-based particles and the crystalline carbon with sulfur-containing pitch;
forming a silicon-carbon composite by primary carbonizing the first mixture at 750 to 1100°C;
obtaining a second mixture by mixing the silicon-carbon composite and a carbon precursor; and
secondary carbonizing the second mixture.

11. The method of claim 10, further comprising:
after the obtaining of the first mixture, pressurizing the first mixture to a pressure of less than 1 ton/cm².

12. The method of claim 10, wherein the secondary carbonizing is performed at 700 to 1100 °C.

13. A lithium secondary battery, comprising:
an anode;
a cathode; and
an electrolyte,
wherein the anode includes the anode active material according to any one of claims 1 to 9.

14. The anode active material of claim 1, wherein sulfur is included in an amount of 0.05 to 0.25 wt% based on a total weight of the anode active material.
